# EUROPÄISCHE PATENTSCHRIFT

(11) **EP 3 352 338 B1**
(45) Veröffentlichungstag und Bekanntmachung des Hinweises auf die Patenterteilung: **17.06.2020**
(21) Anmeldenummer: 17199661.4
(22) Anmeldetag: 02.11.2017
(51) Int. Cl.: H02K 1/27

(54) **VERFAHREN ZUM BEFESTIGEN EINES MAGNETELEMENTS IN EINER AUFNAHMETASCHE EINES ROTORS ODER EINES STATORS EINER ELEKTRISCHEN MASCHINE UND ENTSPRECHENDE ELEKTRISCHE MASCHINE**
METHOD FOR FIXING A MAGNETIC ELEMENT IN A RECESS OF A ROTOR OR A STATOR OF AN ELECTRIC MACHINE AND CORRESPONDING ELECTRIC MACHINE
PROCÉDÉ DE FIXATION D'UN ÉLÉMENT MAGNÉTIQUE DANS UNE POCHE DE RÉCEPTION D'UN ROTOR OU D'UN STATOR D'UNE MACHINE ÉLECTRIQUE ET MACHINE ÉLECTRIQUE CORRESPONDANTE

(30) Priorität: 23.01.2017 DE 102017201003
(43) Veröffentlichungstag der Anmeldung: 25.07.2018
(73) Patentinhaber: Robert Bosch GmbH, 70442 Stuttgart (DE)
(72) Erfinder: Lange, Fabian, 30175 Hannover (DE)

(56) Entgegenhaltungen:
- WO-A2-2013/156307
- CN-U- 203 339 830

## Beschreibung

### Gebiet der Erfindung

Die Erfindung betrifft eine elektrische Maschine umfassend einen Rotor und einen Stator. Ferner betrifft die Erfindung ein Verfahren zum Befestigen eines Magnetelements in einer Aufnahmetasche eines Rotors oder eines Stators einer elektrischen Maschine.

### Stand der Technik

Elektrische Maschinen werden in vielfältigen Anwendungen zur Umwandlung von elektrischer in mechanische Leistung, oder umgekehrt, eingesetzt. Beispielsweise werden elektrische Maschinen als Motoren und/oder Generatoren konzipiert, beispielsweise für Elektro- oder Hybrid-Kraftfahrzeuge.

Dabei werden Magnetelemente wie z.B. Permanentmagneten üblicherweise in Aufnahmetaschen eines Rotors und/oder Stators einer elektrischen Maschine aufgenommen und darin befestigt. Die DE 10 2009 054 584 A1, die DE 10 2015 121 855 A1 und die DE 10 2013 109 625 A1 beschreiben jeweils eine stoffschlüssige Fixierung der Magnetelemente in Aufnahmetaschen mittels Klebstoff oder Gießharz. Hierbei werden in einen Freiraum, der sich zwischen einem jeweiligen Magnetelement und einer jeweiligen Wand bzw. Innenoberfläche der Aufnahmetasche hauptsächlich in axialer Richtung des Rotors bzw. Stators erstreckt, der Klebstoff und/oder das Gießharz eingebracht und ausgehärtet. Bei Rotoren oder Statoren mit einer großen axialen Länge kann ein Problem auftreten, dass der Freiraum nicht über die gesamte axiale Länge gefüllt wird bzw. werden kann, da ein Druckverlust des Klebstoffs bzw. Gießharzes über die Länge zu groß ist. Eine Vergrößerung des Freiraums quer zur Axialrichtung des Rotors bzw. Stators zur Verringerung des Druckabfalls wirkt sich in der Regel negativ auf die elektromagnetische Auslegung des Rotors bzw. Stators aus. Ein weiterer Nachteil bei thermisch auszuhärtenden Klebestoffen bzw. Gießharzen ist in der Regel, dass der Rotor bzw. Stator aufgeheizt und abgekühlt werden muss und dies zusätzliche Energie und Zeit kostet.

Alternativ wird in DE 10004703 A1 und DE 10 2015 201 493 A1 vorgeschlagen, Magnetelemente mittels mechanischer Klemmvorrichtungen in Aufnahmetaschen zu fixieren. Solche Klemmvorrichtungen können jedoch einen Montagevorgang erschweren, insbesondere da eine Klemmwirkung üblicherweise permanent vorliegt und dementsprechend beim Fügen der Magnetelemente in die Aufnahmetaschen überwunden werden muss.

Als weitere Alternative wird in der DE 10 2005 002 332 A1 vorgeschlagen, Magnetelemente durch in ein Blechpaket integrierte Spannelemente zu fixieren. Allerdings muss hierbei Raum für die Spannelemente vorgehalten werden, wodurch weniger Blechmaterial zur Verfügung steht, um einen magnetischen Fluss zu leiten. Außerdem sind in Elektromaschinen eingesetzte Magnetbleche üblicherweise nicht hinsichtlich ihrer mechanischen Eigenschaften sondern nur hinsichtlich ihrer magnetischen Eigenschaften definiert, sodass Spannelemente damit allenfalls ungenau ausgelegt werden können.

Darüber hinaus werden in der WO 2013/156307 A2 und der CN 203 339 830 U weitere alternative Magnetfixierungsanordnungen für elektrische Maschinen offenbart.

### Offenbarung der Erfindung

### Vorteile der Erfindung

Ausführungsformen der vorliegenden Erfindung können in vorteilhafter Weise ermöglichen, ein Magnetelement in einer Aufnahmetasche eines Rotors bzw. Stators technisch einfach und/oder kostengünstig zu fixieren, insbesondere auch bei einer großen axialen Länge des Rotors bzw. Stators bzw. der Aufnahmetasche.

Erfindungsgemäß wird diese Aufgabe mit einer elektrischen Maschine nach den in Anspruch 1 genannten Merkmalen gelöst. Zudem wird die Aufgabe durch ein Verfahren zum Befestigen eines Magnetelements nach den in Anspruch 10 genannten Merkmalen gelöst. Bevorzugte Ausführungsbeispiele können den Unteransprüchen entnommen werden.

Mögliche Merkmale und Vorteile von Ausführungsformen der Erfindung können unter anderem und ohne die Erfindung einzuschränken als auf den nachfolgend beschriebenen Ideen und Erkenntnissen beruhend angesehen werden.

Wie einleitend angeführt, wurde bereits eine Vielzahl von Ansätzen entwickelt, um Magnetelemente in Aufnahmetaschen eines Rotors bzw. Stators zu fixieren. Jeder dieser Ansätze leidet jedoch unter bestimmten Nachteilen. Mit der vorliegenden Erfindung wird ein neuer Ansatz beschrieben, der zumindest etliche dieser Nachteile ausräumen kann.

Dabei wurde es als vorteilhaft erkannt, eine Magnetfixierungsanordnung mithilfe eines aus einem thermoplastischen Material bestehenden Fixierungselements auszubilden.

Thermoplastische Materialien sind meist Kunststoffe, insbesondere Polymere. Beispielsweise können als thermoplastische Materialien Polyolefine, wie Polyethylen (PE) und Polypropylen (PP), Acrylnitril-Butadien-Styrol (ABS), Polyamide (PA), Polylactat (PLA), Polymethylmethacrylat (PMMA), Polycarbonat (PC), Polyethylenterephthalat (PET), Polystyrol (PS), Polyetheretherketon (PEEK) und Polyvinylchlorid (PVC) oder auch Zelluloid verwendet werden. Thermoplastische Materialien sind dabei meist kostengünstig herstellbar sowie einfach und kostengünstig verarbeitbar, z.B. durch Spritzguss.

Thermoplastisches Material zeichnet sich dadurch aus, dass es bei Erwärmung innerhalb eines bestimmten Temperaturbereichs einfach und dauerhaft plastisch verformt werden kann, wobei die Verformung reversibel sein kann. Bei niedrigen Temperaturen wie z.B. Umgebungstemperaturen oder Temperaturen, wie sie im normalen Betrieb in einer elektrischen Maschine herrschen, d.h. bei weniger als z.B. 80°C oder 100°C, sind thermoplastische Materialien in der Regel fest, d.h. formstabil. Dabei können die thermoplastischen Materialien weitgehend starr und/oder auch elastisch deformierbar sein. Wenn sie über eine materialspezifische Temperatur hinaus erwärmt werden, werden thermoplastische Materialien plastisch, d.h. sie können mit geringem Kraftaufwand in eine andere Geometrie verformt werden, welche bei einem anschließenden Abkühlen erhalten bleibt. Wird ein thermoplastisches Material noch weiter erhitzt, wird es typischerweise flüssig, wobei es natürlich auch verformt werden kann, aber eine Verarbeitung schwieriger sein kann als im thermoplastischen Zustand bei geringeren Temperaturen, da das Material unerwünscht wegfließen kann.

Die genannten Eigenschaften thermoplastischer Materialien können vorteilhaft zum Fixieren von Magnetelementen in einer elektrischen Maschine genutzt werden.

Ein Fixierungselement kann vorab als separates Bauteil gefertigt und bereitgestellt werden. Das Fixierungselement kann z.B. aus einem thermoplastischen Material spritzgegossen werden.

Beim Zusammenbau des Rotors bzw. des Stators können in die in dem Rotor bzw. Stator vorgesehenen Aufnahmetaschen zunächst die Magnetelemente eingeschoben werden. Eine Geometrie der Magnetelemente ist dabei typischerweise so gewählt, dass die Magnetelemente einen geringfügig kleineren Querschnitt aufweisen als die Aufnahmetaschen, sodass sie einfach und ohne seitlich an den Wänden der Aufnahmetaschen pressend zu reiben in die Aufnahmetaschen eingeführt werden können. Zwischen einem in eine Aufnahmetasche eingeführten Magnetelement und zumindest einer der Wände der Aufnahmetasche verbleibt daher ein gewisses seitliches Spiel, welches hierin als Spaltraum bezeichnet wird. Gegebenenfalls kann angrenzend an ein Volumen der Aufnahmetasche, in dem ein Magnetelement aufgenommen werden soll, auch gezielt ein kanalartiges Spaltraumvolumen vorgesehen werden.

In den Spaltraum bzw. das speziell vorgesehene Spaltraumvolumen kann dann das thermoplastische Fixierungselement eingebracht werden. Das Fixierungselement kann dabei in Axialrichtung eingeschoben werden. Vorzugsweise weist das Fixierungselement einen geringfügig kleineren Querschnitt auf als der Spaltraum bzw. das Spaltraumvolumen, sodass es mit seitlichem Spiel, d.h. mit einer Spielpassung, eingeführt werden kann. Alternativ kann das Fixierungselement zumindest bereichsweise auch einen gleichen oder geringfügig größeren Querschnitt aufweisen und dann mit einer Presspassung in den Spaltraum bzw. das Spaltraumvolumen eingeführt werden.

Gegebenenfalls kann ein Fixierungselement auch in die Aufnahmetasche eingeführt und an vorgesehener Position gehalten werden, bevor das bzw. die Magnetelemente in die Aufnahmetasche eingebracht werden.

Wenn sowohl das bzw. die Magnetelemente als auch das bzw. die Fixierungselemente in den Aufnahmetaschen angeordnet wurden, können die Fixierungselemente derart verformt werden, dass sie die Magnetelemente in den Aufnahmetaschen fixieren. Hierzu können die Fixierungselemente zumindest lokal begrenzt bis auf eine Temperatur erwärmt werden, bei der sie plastisch verformt werden können. In diesem plastisch deformierbaren Zustand werden die Fixierungselemente dann zumindest an einem ihrer Enden derart verformt, dass es zu einem in radialer Richtung wirkenden Formschluss zwischen dem Fixierungselement einerseits und einem Magnetelement sowie einer Wandung des Rotors bzw. Stators im Bereich der Aufnahmekammer andererseits kommt. Durch diesen Formschluss wird das Magnetelement in der Aufnahmekammer fixiert und insbesondere gegen ein axiales Verlagern gesichert.

In radialer Richtung kann sich ebenfalls ein Formschluss oder aber auch lediglich ein Kraftschluss einstellen. Beispielsweise kann plastifiziertes Thermoplastmaterial formschlüssig in Vertiefungen innerhalb einer Wandung einer Aufnahmekammer gepresst werden. Alternativ kann das Thermoplastmaterial lediglich kraftschlüssig an eine Wandung der Aufnahmekammer gepresst werden.

Da das Fixierungselement üblicherweise zumindest in Teilbereichen mit einem gewissen seitlichen Spiel in den Spaltraum zwischen dem zu fixierenden Magnetelement und einer Wandung der Aufnahmekammer eingeschoben wurde und vorzugsweise lediglich an einem oder beiden seiner Endabschnitte plastisch verformt wird, verbleibt in einem Mittelabschnitt zwischen diesen Endabschnitten ein geringfügiger Spalt. Je nachdem wie das Fixierungselement ursprünglich ausgestaltet wurde und/oder in dem Spaltraum positioniert wurde, kann sich dieser Spalt zwischen dem Magnetelement und dem Fixierungselement oder zwischen dem Fixierungselement und einer Innenwandung der Aufnahmekammer erstrecken, oder beides.

Zum geeigneten plastischen Verformen des Fixierungselements kann zumindest einer von dessen Endbereichen mittels eines auf den Endbereich aufgepressten, erhitzten Werkzeugs verformt wird. Dies entspricht im Wesentlichen einem Heißverstemmen des Endbereichs. Das Werkzeug wird dabei auf eine Temperatur gebracht, bei der das thermoplastische Material des Fixierungselements plastisch, aber vorzugsweise noch nicht flüssig, wird. Dabei wird das Werkzeug auf den Endbereich des Fixierungselements gepresst. Das Werkzeug weist an seiner mit dem Fixierungselement in Kontakt kommenden Seite vorzugsweise eine geeignete Geometrie auf, sodass es den plastifizierten Endbereich des Fixierungselements derart deformiert, dass es zum gewünschten axial-formschlüssigen Fixieren des Magnetelements kommt, sobald der Endbereich wieder abgekühlt und erstarrt ist.

Das längliche Fixierungselement kann in dem fertiggestellten Rotor bzw. Stator somit an einem der beiden Endabschnitte oder an beiden Endabschnitten unter temporärer Erwärmung plastisch verformt sein. Durch das plastische Verformen des thermoplastischen Materials sollten sich im Allgemeinen Veränderungen in einer mikroskopischen Struktur des Thermoplasts einstellen, welche sich als strukturelle Merkmale nachweisen lassen.

Vorzugsweise weisen das Fixierungselement und der Spaltraum zueinander im Wesentlichen komplementäre Querschnittsgeometrien auf. Mit anderen Worten können die Querschnittsgeometrien des noch nicht deformierten Fixierungselements einerseits und des zwischen dem Magnetelement und einer Wandung der Aufnahmetasche verbleibenden Spaltraums andererseits derart ähnlich sein, dass das Fixierungselement zwar mit einem geringfügigen seitlichen Spiel in den Spaltraum eingeführt werden kann, d.h. mit Spielpassung, dass das seitliche Spiel jedoch vorzugsweise in Form eines verhältnismäßig engen Spaltes homogener Breite ausgestaltet ist. Beispielsweise kann in einen quaderförmigen oder halbzylinderförmigen Spaltraum ein ebenfalls quaderförmiges bzw. halbzylinderförmiges Fixierungselement eingeführt werden.

Gemäß einer Ausführungsform kann das Fixierungselement zumindest in seinen Endbereichen als Hohlkörper mit einem sich in der Axialrichtung verlaufenden Hohlraum ausgebildet sein. Mit anderen Worten kann das Fixierungselement zumindest in Teilbereichen hohl ausgebildet sein. Der Hohlraum kann dabei durchgehend oder sich nur über Teilbereiche erstreckend ausgebildet sein. Insbesondere kann der Hohlraum an den Stirnseiten des Fixierungselements nach außen hin offen sein. Hohl ausgebildete Teilbereiche können besonders einfach plastisch verformbar sein. Beispielsweise kann ein Kopf eines Werkzeugs in einen hohlen Teilbereich eingepresst werden und diesen nach radial außen pressen, um den gewünschten Formschluss mit einer umgebenden Wandung des Rotors bzw. Stators herzustellen.

Gemäß einer alternativen Ausführungsform ist das Fixierungselement zumindest in seinen Endbereichen als Vollkörper ohne Hohlraum ausgebildet. Mit anderen Worten kann das Fixierungselement vollständig mit thermoplastischem Material ausgebildet sein, ohne dabei einen oder mehrere Hohlräume zu umschließen. Ein solches als Vollkörper ausgebildetes Fixierungselement kann insbesondere in seinen Endabschnitten viel plastisch verformbaren Material bereitstellen, um nach dessen erwärmtem Verformen den gewünschten stabilen Formschluss herstellen zu können.

Beispielsweise kann das Fixierungselement zylinderförmig oder bolzenförmig ausgebildet sein. Das Fixierungselement kann dabei zumindest über weite Teilbereiche hin als Hohlzylinder oder Vollzylinder ausgebildet sein. Ein oder beide Endabschnitte können ebenfalls zylindrisch ausgestaltet sein, können alternativ aber auch eine andere Geometrie aufweisen. Das Fixierungselement kann bolzenförmig, d.h. insbesondere länglich, sein, sodass es in den Spaltraum ähnlich wie ein Bolzen oder Splint eingefügt werden kann.

Gemäß einer Ausführungsform steht zumindest ein Endabschnitt des Fixierungselements axial über eine an die Aufnahmetasche angrenzende Stirnfläche des Rotors bzw. Stators über und ist plastisch verformt. Mit anderen Worten ragt ein Endabschnitt bzw. ragen vorzugsweise beide Endabschnitte des Fixierungselements axial aus der Aufnahmetasche heraus. Ein überstehender Teil des Endabschnitts kann dabei derart plastisch verformt sein, dass er für den gewünschten axialen Formschluss zum Fixieren des Magnetelements sorgt. Der überstehende Teil des Endabschnitts des Fixierungselements kann dabei einfach durch ein geeignet geformtes Werkzeug plastisch deformiert werden, in dem das Werkzeug ihn zunächst lokal erwärmt und dann in Richtung der angrenzenden Stirnfläche des Rotors bzw. Stators gepresst wird und dabei den überstehenden Teil des Endabschnitts verformt, insbesondere nach außen hin zu einem Rand der Aufnahmetasche bzw. Bereichen der angrenzenden Stirnfläche deformiert.

Gemäß einer alternativen Ausführungsform steht zumindest ein Ende des Fixierungselements axial nicht über eine an die Aufnahmetasche angrenzende Stirnfläche des Rotors bzw. Stators über. Mit anderen Worten kann es für bestimmte Ausgestaltungen des Rotors bzw. Stators der elektrischen Maschine vorteilhaft sein, das Fixierungselement derart auszugestalten, dass es vollständig in die Aufnahmetasche bzw. den darin vorgesehenen Spaltraum eingeführt werden kann, ohne an seinen Enden über angrenzende Stirnflächen des Rotors bzw. Stators über zu stehen. Das Fixierungselement kann somit vollständig in dem Spaltraum aufgenommen sein und an seinen Stirnflächen mit einer angrenzenden Stirnfläche des Rotors bzw. Stators bündig abschließen oder gegenüber dieser versenkt sein.

Gemäß einer Ausführungsform weist der Rotor bzw. der Stator ein Paket aus mehreren nebeneinander gestapelten Lamellen mit Ausstanzungen zur Bildung der Aufnahmetaschen auf. Die Lamellen können dabei aus dünnen Magnetblechen gebildet sein, in denen geeignete Ausnehmungen eingestanzt wurden. Nachdem die Lamellen nebeneinander gestapelt wurden und dabei die Ausnehmungen fluchtend miteinander ausgerichtet wurden, um die Aufnahmetaschen zu bilden, können geeignete dimensionierte Magnetelemente in die Aufnahmetaschen eingeführt werden. Ein solcher aus Lamellen zusammengesetzter Rotor bzw. Stator kann vorteilhafte magnetische Eigenschaften aufweisen.

Insbesondere kann der Rotor bzw. Stator auch mehrere Pakete aus gestapelten Lamellen aufweisen, wobei die Pakete derart angeordnet sein können, dass ihre Aufnahmetaschen miteinander fluchtend ausgerichtet sind oder, alternativ, derart, dass ihre Aufnahmetaschen in Umfangsrichtung um einen Winkel versetzt zueinander orientiert angeordnet sind.

Insbesondere bei einem solchen lamellenartigen Aufbau des Rotors bzw. Stators kann zumindest bei einer stirnseitigen Lamelle an einer Stirnseite des Pakets die Ausstanzung einen größeren Querschnitt aufweisen als bei Lamellen im Zentrum des Pakets. Dabei kann sich einer der Endbereiche des Fixierungselements in den größeren Querschnitt der stirnseitigen Lamelle erstrecken.

Mit anderen Worten können die Lamellen unterschiedlich große Ausstanzungen aufweisen, wobei Lamellen, die an oder nahe einer der Stirnseiten des Lamellenpakets anzuordnen sind, mit größeren Ausstanzungen versehen werden als Lamellen, die nahe des axialen Zentrums des Lamellenpakets angeordnet werden. Diese größeren Ausstanzungen können Raum bieten, in den Material des Fixierungselements eingepresst werden kann, wenn ein Endabschnitt des Fixierungselements plastisch verformt wird. Auf diese Weise kann das Fixierungselement derart plastisch verformt werden, dass einer oder vorzugsweise beide seiner Endabschnitte in die dort vorgesehenen vergrößerten Ausstanzungen in stirnseitigen Lamellen eingepresst werden und dann nach dem plastische Verformen vorzugsweise nicht mehr axial über die Stirnflächen des Rotors bzw. Stators bzw. deren Lamellenpakete überstehen.

Der gewünschte Formschluss zum Fixieren der Magnetelemente kann damit erreicht werden, ohne dass das Fixierungselement axial über Stirnflächen von Lamellenpaketen übersteht. Mehrere Lamellenpakete können daher axial nebeneinander gestapelt werden und dabei gegebenenfalls mit einem Winkelversatz zueinander angeordnet werden.

Es wird darauf hingewiesen, dass einige der möglichen Merkmale und Vorteile der Erfindung hierin mit Bezug auf unterschiedliche Ausführungsformen der elektrischen Maschine bzw. des Verfahrens zum Befestigen eines Magnetelements in einer Aufnahmetasche eines Rotors oder Stators einer elektrischen Maschine beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine perspektivische Ansicht auf einen Teil eines Rotors einer erfindungsgemäßen Ausführungsform der elektrischen Maschine vor und nach dem Fixieren eines Magnetelements mittels eines Fixierungselements;
Fig. 2a,b zeigen Seitenansichten eines Teils eines Rotors einer erfindungsgemäßen Ausführungsform der elektrischen Maschine vor und nach dem Fixieren eines Magnetelements mittels eines Fixierungselements;
Fig. 3a,b zeigen Seitenansichten eines Teils eines Rotors einer alternativen erfindungsgemäßen Ausführungsform der elektrischen Maschine vor und nach dem Fixieren eines Magnetelements mittels eines Fixierungselements;
Fig. 4a,b zeigen Seitenansichten eines Teils eines Rotors einer weiteren alternativen erfindungsgemäßen Ausführungsform der elektrischen Maschine vor und nach dem Fixieren eines Magnetelements mittels eines Fixierungselements;
Fig. 5a,b zeigen Seitenansichten eines Teils eines Rotors noch einer weiteren alternativen erfindungsgemäßen Ausführungsform der elektrischen Maschine vor und nach dem Fixieren eines Magnetelements mittels eines Fixierungselements;

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

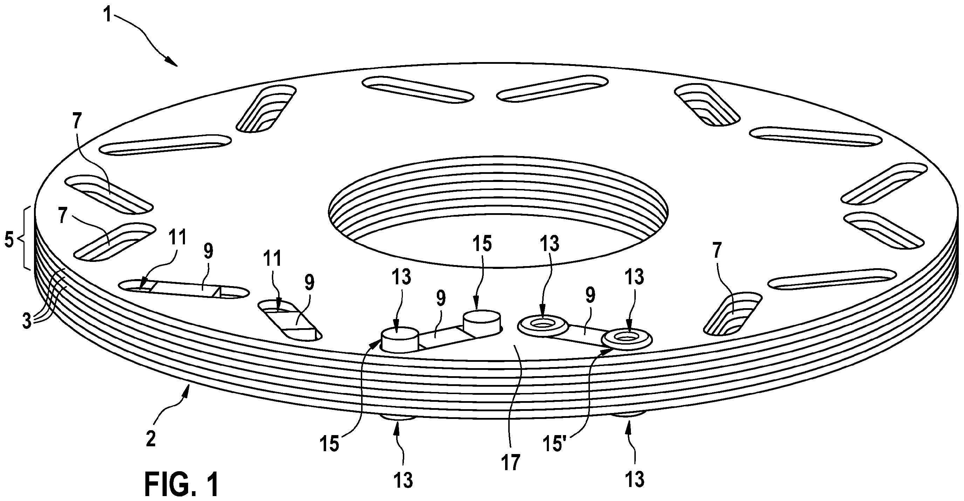

Fig. 1 zeigt einen Rotor 1 einer elektrischen Maschine gemäß einer Ausführungsform der vorliegenden Erfindung. Ein Rotorkörper 2 des Rotors 1 ist aus einer Vielzahl geeignet in Form gestanzter Lamellen 3 aus Magnetblech zusammengesetzt. Mehrere Lamellen 3 können dabei zusammen ein Lamellenpaket 5 bilden. Durch den Rotorkörper 2 erstrecken sich nahe des Außenumfangs des Rotors mehrere Aufnahmetaschen 7. Die Aufnahmetaschen 7 erstrecken sich dabei in Axialrichtung des Rotors 1 durch das Lamellenpaket hindurch und werden durch miteinander fluchtend ausgerichtete Ausstanzungen in den Lamellen 3 des Lamellenpakets 5 gebildet. In den Aufnahmetaschen 7 ist jeweils wenigstens ein Magnetelement 9 beispielsweise in Form eines Permanentmagneten aufgenommen.

Wie bei zwei in Fig. 1 auf der linken Seite dargestellten Aufnahmetaschen 7 veranschaulicht, füllt ein Magnetelement 9 zwar einen überwiegenden Teil eines Volumens der Aufnahmetasche 7 aus. Seitlich angrenzend an das Magnetelement 9 verbleibt jedoch ein Spaltraum 11, der nicht von dem Magnetelement 9 ausgefüllt wird. Mit anderen Worten wird das Magnetelement 9 in der Aufnahmetasche 7 mit etwas seitlichem Spiel und vorzugsweise auch mit etwas radialem Spiel aufgenommen.

Wie bei zwei in Fig. 1 weiter rechts dargestellten Aufnahmetaschen 7 veranschaulicht, wird beim Montieren des Rotors 1 in den Spaltraum 11 ein speziell angepasstes Fixierungselement 13 eingeschoben. Das Fixierungselement 13 ist vorgefertigt und besteht dabei aus einem thermoplastischen Material. Das Fixierungselement 13 kann bolzenartig ausgebildet sein und durch den länglichen Spaltraum 11 in Axialrichtung parallel zu dem in der Aufnahmetasche 7 aufgenommenen Magnetelement 9 verlaufen. Das Fixierungselement 13 füllt den Spaltraum 11 dabei weitgehend aus, insbesondere kann es einen zu dem Spaltraum 11 im Wesentlichen komplementären Querschnitt aufweisen. Es kann jedoch ein geringfügiges seitliches Spiel verbleiben, sodass das Fixierungselement 13 einfach und möglichst reibungsfrei in den Spaltraum 11 eingeschoben werden kann.

Bei dem in Fig. 1 dargestellten Beispiel steht dabei ein Endabschnitt 15 des Fixierungselements 13 axial über eine an die Aufnahmetasche 7 angrenzende Stirnfläche 17 des Rotors 1 über.

Um das Magnetelement 9 nun in der Aufnahmetasche 7 zu fixieren, kann insbesondere der axial überstehende Endabschnitt 15 des Fixierungselements 13 lokal erwärmt und dann plastisch verformt werden, sodass sich ein geeigneter Formschluss einstellt, der das Magnetelement 9 zumindest an einem axialen Verlagern relativ zur Aufnahmetasche 7 hindert. Vorzugsweise verhindert der durch das Fixierungselement 13 bewirkte Formschluss auch, dass sich das Magnetelement 9 quer zur Axialrichtung innerhalb der Aufnahmetasche 7 verlagern kann. Ein entsprechend in seinem oberen Endabschnitt 15' plastisch verformtes Fixierungselement 13 ist in Fig. 1 bei einer Aufnahmetasche 7 rechts neben den in den Endabschnitten 15 zunächst unverformt dargestellten Fixierungselementen 13 dargestellt.

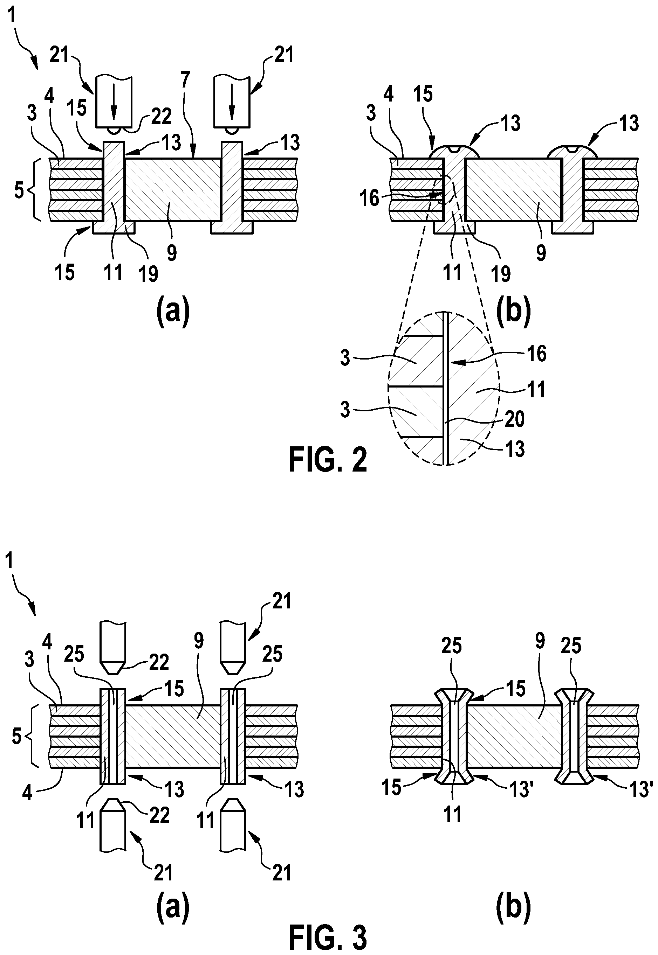

In den Fig. 2a und b ist eine Ausführungsform eines Rotors 1 durch eine Teil-Querschnittsansicht veranschaulicht. Zwei Fixierungselemente 13 sind in Spalträumen 11 an gegenüberliegenden Seiten eines Magnetelements 9 in einer Aufnahmetasche 7 aufgenommen.

Die Fixierungselemente 13 sind hierbei als bolzenartige Vollkörper ausgebildet, das heißt, sie bestehen vollständig aus thermoplastischem Material. Ein Querschnitt bzw. Durchmesser der Fixierungselemente 13 entspricht einem Querschnitt des zugehörigen Spaltraums 11 oder füllt diesen zumindest größtenteils aus. An einem unteren Endabschnitt 15 weisen die Fixierungselemente 13 einen im Querschnitt verbreiterten Flansch 19 oder Kopf auf. Ein gegenüberliegender oberer Endabschnitt 15 weist zunächst den gleichen oder sogar kleineren Querschnitt auf wie ein Zentralbereich des Fixierungselements 13.

Nachdem das Fixierungselement 13 in einen zugehörigen Spaltraum 11 möglichst mit Spielpassung eingeführt wurde, wird mithilfe eines beheizbaren Umformwerkzeuges 21 der nach oben über eine Stirnfläche 4 des Rotors 1 überstehende Endabschnitt 15 plastisch verformt. Das Umformwerkzeug 21 ist dabei an seiner Stemmfläche 22 auf eine Temperatur von beispielsweise mehr als 100 °C erhitzt und wird mit der geeignet geformten Stemmfläche 22 in Axialrichtung auf den überstehenden Endabschnitt 15 gepresst.

Dabei verformt sich dieser thermisch erwärmte Endabschnitt 15 in der in Fig. 2b dargestellten Weise. Insbesondere wird ein Teil des thermoplastischen Materials des Fixierungselements 13 seitlich verlagert, sodass es auf der einen Seite das Lamellenpaket 5 an der Stirnfläche 4 überdeckt und an der anderen Seite einen Rand des Magnetelements 9 überdeckt.

Durch ein solches lokales Überdecken des mithilfe des Umformwerkzeugs 21 umgeformten kopf-artig verbreiterten Endabschnitts 15 über das Lamellenpaket 5 einerseits und über das Magnetelement 9 andererseits kommt es zu dem gewünschten Formschluss in axialer Richtung, der ein axiales verlagern des Magnetelements 9 verhindert.

Da jedoch lediglich der Endabschnitt 15 erwärmt und plastisch verformt wurde, das Fixierungselement 13 jedoch anfänglich mit etwas seitlichem Spiel in den Spaltraum 11 geschoben wurde, verbleibt zumindest in einen zwischen den gegenüberliegenden Endabschnitten 15 liegenden Mittelabschnitt 16 ein schmaler Spalt 20, der sich zwischen einer Oberfläche des Fixierungselements 13 und einer Innenoberfläche der Aufnahmetasche 7 und/oder zwischen einer Oberfläche des Fixierungselements 13 und einer Oberfläche des Magnetelements 9 erstreckt, wie vergrößert in Fig. 2b dargestellt.

Fig. 3a,b veranschaulicht eine weitere Ausführungsform eines Rotors 1 einer elektrischen Maschine. In diesem Fall sind die Fixierungselemente 13 als zylindrische Hohlkörper mit einem in Axialrichtung verlaufenden Hohlraum 25 ausgebildet. Ein Umformwerkzeug 21 weist eine beheizbare Stemmfläche 22 mit konisch angefaster Geometrie auf. Diese Stemmfläche 22 wird in den Hohlraum 25 des Fixierungselements 13 plastisch verformend und diesen an den Endabschnitten 15 nach außen pressend gedrückt, um dadurch den gewünschten Formschluss an beiden Endbereichen 15 des Fixierungselements 13 auszubilden.

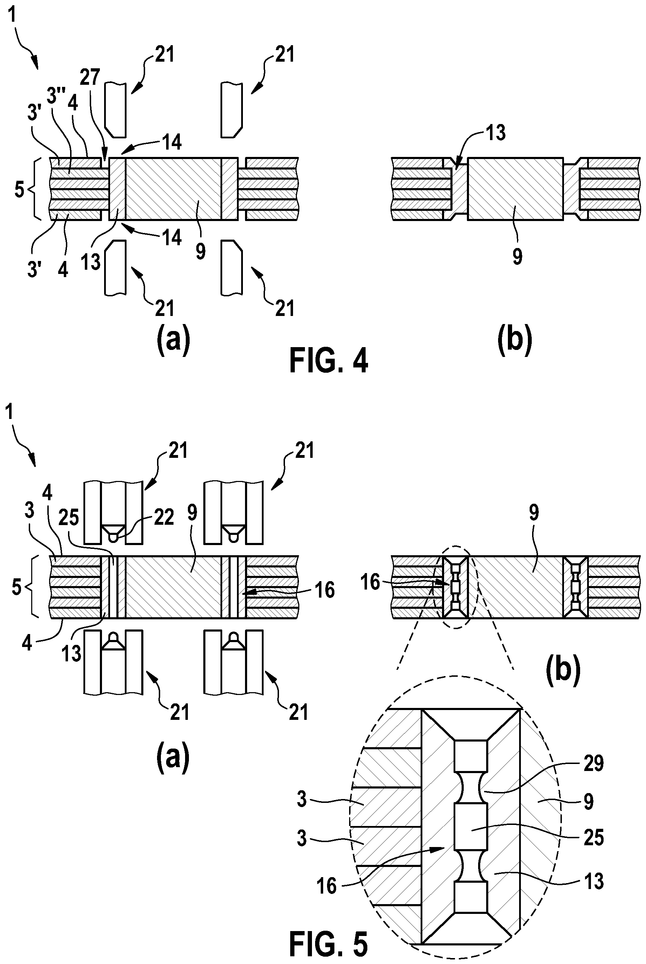

Bei der in den Fig. 4a,b dargestellten Ausführungsform weist das Lamellenpaket 5 Lamellen 3 mit unterschiedlich großen Ausstanzungen 27 auf. Stirnseitige Lamellen 3' weisen dabei Ausstanzungen 27 mit größerem Querschnitt auf als im Zentrum des Pakets 5 angeordnete Lamellen 3".

Ein Umformwerkzeug 21 ist in diesem Fall derart ausgebildet, dass Endabschnitte 15 des Fixierungselements 13 bei einem Umformprozess zumindest teilweise in die größeren Ausnehmungen 27 der stirnseitigen Lamellen 3' hinein plastisch verformt werden.

Auf diese Weise kann ein hinterschneidender Formschluss zwischen dem Fixierungselement 13 und dem Lamellenpaket 5 im Bereich der vergrößerten Ausstanzungen 27 erzeugt werden.

Die Fixierungselemente 13 können in diesem Fall kürzer ausgebildet werden als in den vorangehenden beiden Ausführungsformen und brauchen insbesondere nichts axial über das Lamellenpaket 5 überstehen, sondern können bündig mit diesem oder sogar nach innen versetzt zu diesem abschließen. Dadurch kann ein Rotor 1 aus mehreren solchen Lamellenpaketen 5 zusammengesetzt werden und die Lamellenpakete 5 dabei mit einem Winkelversatz relativ zueinander nebeneinander gestapelt werden.

Bei der in den Fig. 5a,b dargestellten Ausführungsform ist das Fixierungselement 13 wiederum als Hohlkörper mit einem Hohlraum 25 ausgebildet und im Wesentlichen bündig mit Stirnflächen 4 des Lamellenpakets 5 in dessen Aufnahmetaschen 7 bzw. in den Spalträumen 11 aufgenommen.

Die Stemmfläche 22 eines speziellen Umformwerkzeugs 21 ist dabei derart ausgestaltet, dass beim Aufpressen des Umformwerkzeugs 21 angefaste Bereiche des Stemmwerkzeugs 22 plastifiziertes Material des Fixierungselements 13 teilweise nach außen und teilweise hin zum Mittelabschnitt 16 des Fixierungselements pressen. Dabei wird, wie in Fig. 5b vergrößert dargestellt, eine Aufdickung 29 erzeugt. Ferner dringt plastifiziertes Thermoplastmaterial des Fixierungselements 13 unter anderem in Ritzen oder zwischen Grate benachbarter Lamellen 3 ein und sorgt dort für den gewünschten Formschluss.

Durch die hierin vorgeschlagene Verwendung eines aus thermoplastischem Material bestehenden Fixierungselements 13 und durch dessen gezieltes plastisches Umformen können mehrere Vorteile erzielt werden. Beispielsweise brauchen die Endabschnitte 15 des Fixierungselements nur lokal erwärmt werden, um dann plastisch verformt werden zu können. Im Vergleich zu herkömmlichen Fixierungsansätzen, bei denen Magnete mittels eines Duroplasts verklebt wurden und bei denen meist der gesamte Rotor 1 erwärmt werden musste, kann somit erheblich Energie eingespart werden. Auch Taktzeiten bei der Herstellung können verkürzt werden. Da das Fixierungselement 13 aus magnetisch unwirksamem Thermoplastmaterial besteht, wird ein Magnetfluss innerhalb des Rotors 1 nicht negativ beeinflusst. Das Thermoplastmaterial kann eine hohe Festigkeit bei gleichzeitig geringer Dichte aufweisen, sodass die rotierende Masse des Rotors 1 gering gehalten werden kann. Außerdem können Fixierungselemente mit komplexer Geometrie einfach z.B. spritzgegossen werden. Das für die Fixierungselemente 13 verwendete Thermoplastmaterial weist im Allgemeinen eine ausreichende thermische Beständigkeit für eine Verwendung in elektrischen Maschinen auf.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Elektrische Maschine mit einem Rotor (1) und einem Stator,
wobei der Rotor (1) und/oder der Stator wenigstens eine Aufnahmetasche (7), welche sich in Axialrichtung durch den Rotor (1) bzw. Stator erstreckt, und wenigstens ein in der Aufnahmetasche (7) aufgenommenes und mittels einer Magnetfixierungsanordnung in der Aufnahmetasche (7) fixiertes Magnetelement (9) aufweist, und
die Magnetfixierungsanordnung zumindest ein längliches Fixierungselement (13) aus einem thermoplastischen Material aufweist, welches sich in einem in Axialrichtung verlaufenden Spaltraum (11) angrenzend an das Magnetelement (9) durch die Aufnahmetasche (7) erstreckt und formschlüssig mit dem Magnetelement (9) zusammenwirkt, um dieses in der Aufnahmetasche (7) zu fixieren, wobei das Fixierungselement (13) an seinen Endabschnitten (15) formschlüssig mit dem Magnetelement (9) zusammenwirkt
**dadurch gekennzeichnet, dass**
das längliche Fixierungselement (13) an einem der beiden Endabschnitte (15) oder an beiden Endabschnitten (15) unter temporärer Erwärmung plastisch verformt ist und in einem zwischen den Endabschnitten (15) liegenden Mittelabschnitt (16) mit einem Spalt (20) zu einer die Aufnahmetasche (7) begrenzenden Wand und/oder zu einer Oberfläche des Magnetelements (9) beabstandet ist, wobei der Spalt (20) durch ein Anordnen des länglichen Fixierungselements (13) in den Spaltraum (11) unter Vorsehen einer Spielpassung gebildet ist.

2. Elektrische Maschine nach Anspruch 1, wobei das Fixierungselement (13) und der Spaltraum (11) zueinander im Wesentlichen komplementäre Querschnittsgeometrien aufweisen.

3. Elektrische Maschine nach einem der Ansprüche 1 bis 2, wobei das Fixierungselement (13) zumindest in seinen Endbereichen (15) als Hohlkörper mit einem sich in der Axialrichtung verlaufenden Hohlraum (25) ausgebildet ist.

4. Elektrische Maschine nach einem der Ansprüche 1 bis 2, wobei das Fixierungselement (13) zumindest in seinen Endbereichen (15) als Vollkörper ohne Hohlraum ausgebildet ist.

5. Elektrische Maschine nach einem der Ansprüche 1 bis 2, wobei das Fixierungselement (13) zylinderförmig oder bolzenförmig ausgebildet ist.

6. Elektrische Maschine nach einem der vorhergehenden Ansprüche, wobei zumindest ein Endabschnitt (15) des Fixierungselements (13) axial über eine an die Aufnahmetasche (7) angrenzende Stirnfläche (4) des Rotors (1) bzw. Stators übersteht und plastisch verformt ist.

7. Elektrische Maschine nach einem der Ansprüche 1 bis 6, wobei zumindest ein Ende des Fixierungselements (13) axial nicht über eine an die Aufnahmetasche (7) angrenzende Stirnfläche (4) des Rotors (1) bzw. Stators übersteht.

8. Elektrische Maschine nach einem der vorhergehenden Ansprüche, wobei der Rotor (1) bzw. der Stator ein Paket (5) aus mehreren nebeneinander gestapelten Lamellen (3) mit Ausstanzungen (27) zur Bildung der Aufnahmetasche (7) aufweist.

9. Elektrische Maschine nach Anspruch 8, wobei zumindest bei einer stirnseitigen Lamelle (3') an einer Stirnseite (4) des Pakets (5) die Ausstanzung (27) einen größeren Querschnitt aufweist als bei Lamellen (3") im Zentrum des Pakets (5), wobei sich einer der Endbereiche (15) des Fixierungselements (13) in die Ausstanzung (27) größeren Querschnitts der stirnseitigen Lamelle (3) erstreckt.

10. Verfahren zum Befestigen eines Magnetelements (9) in einer Aufnahmetasche (7) eines Rotors (1) oder Stators einer elektrischen Maschine, wobei der Rotor (1) bzw. der Stator mindestens eine Aufnahmetasche (7), welche sich in Axialrichtung durch den Rotor (1) bzw. Stator erstreckt und in der wenigstens ein Magnetelement (9) aufzunehmen ist, aufweist, und wobei sich in der Aufnahmetasche (7) angrenzend an das aufzunehmende Magnetelement (9) ein nicht von dem Magnetelement (9) auszufüllender und in Axialrichtung verlaufender Spaltraum (11) erstreckt,
wobei das Verfahren folgende Schritte umfasst:
- Anordnen des Magnetelements (9) in der Aufnahmetasche (7);
- Anordnen eines länglichen Fixierungselements (13) aus einem thermoplastischen Material in dem Spaltraum (11) unter Vorsehen einer Spielpassung;
- Erwärmen und plastisches Verformen zumindest eines Endabschnitts (15) des Fixierungselements (13) derart, dass es formschlüssig mit dem Magnetelement (9) zusammenwirkt, um dieses in der Aufnahmetasche (7) zu fixieren.

11. Verfahren nach Anspruch 10, wobei der Endbereich (15) des Fixierungselements (13) mittels eines auf den Endbereich (15) aufgepressten, erhitzten Umformwerkzeugs (21) verformt wird.

## Claims

1. Electrical machine comprising a rotor (1) and a stator,
wherein the rotor (1) and/or the stator have/has at least one receiving pocket (7), which extends in the axial direction through the rotor (1) or stator, and at least one magnet element (9) which is received in the receiving pocket (7) and is fixed by means of a magnet fixing arrangement in the receiving pocket (7), and
the magnet fixing arrangement has at least one elongate fixing element (13) composed of a thermoplastic material which extends in a gap area (11), which runs in the axial direction, adjacent to the magnet element (9) through the receiving pocket (7) and interacts in an interlocking manner with the magnet element (9) in order to fix the said magnet element in the receiving pocket (7), wherein the fixing element (13), at its end sections (15), interacts in an interlocking manner with the magnet element (9),
**characterized**
**in that** the elongate fixing element (13) is plastically deformed at one of the two end sections (15) or at both end sections (15) with temporary heating and is spaced apart by a gap (20) from a wall, which delimits the receiving pocket (7), and/or from a surface of the magnet element (9) in a central section (16) which is situated between the end sections (15), wherein the gap (20) is formed by arranging the elongate fixing element (13) in the gap area (11) with provision of a clearance fit.

2. Electrical machine according to Claim 1, wherein the fixing element (13) and the gap area (11) have substantially complementary cross-sectional geometries in relation to one another.

3. Electrical machine according to either of Claims 1 and 2, wherein the fixing element (13), at least in its end regions (15), is designed as a hollow body with a cavity (25) which runs in the axial direction.

4. Electrical machine according to either of Claims 1 and 2, wherein the fixing element (13), at least in its end regions (15), is designed as a solid body without a cavity.

5. Electrical machine according to either of Claims 1 and 2, wherein the fixing element (13) is of cylindrical or bolt-like design.

6. Electrical machine according to one of the preceding claims, wherein at least one end section (15) of the fixing element (13) projects axially beyond an end face (4) of the rotor (1) or stator, which end face adjoins the receiving pocket (7), and is plastically deformed.

7. Electrical machine according to one of Claims 1 to 6, wherein at least one end of the fixing element (13) does not project axially beyond an end face (4) of the rotor (1) or stator, which end face adjoins the receiving pocket (7).

8. Electrical machine according to one of the preceding claims, wherein the rotor (1) or the stator has a core (5) comprising a plurality of laminates (3) which are stacked next to one another and have punched-out portions (27) for forming the receiving pocket (7).

9. Electrical machine according to Claim 8, wherein the punched-out portion (27) has a larger cross section at least in an end-side laminate (3') on an end side (4) of the core (5) than in laminates (3") in the centre of the core (5), wherein one of the end regions (15) of the fixing element (13) extends into the punched-out portion (27) of larger cross section of the end-side laminate (3) .

10. Method for fastening a magnet element (9) in a receiving pocket (7) of a rotor (1) or stator of an electrical machine, wherein the rotor (1) or the stator has at least one receiving pocket (7) which extends in the axial direction through the rotor (1) or stator and is to be received in the at least one magnet element (9), and wherein a gap area (11) which is not to be filled by the magnet element (9) and runs in the axial direction extends in the receiving pocket (7) adjacent to the magnet element (9) to be received,
wherein the method comprises the following steps:
- arranging the magnet element (9) in the receiving pocket (7);
- arranging an elongate fixing element (13) composed of a thermoplastic material in the gap area (11) with provision of a clearance fit;
- heating and plastically deforming at least one end section (15) of the fixing element (13) in such a way that it interacts in an interlocking manner with the magnet element (9) in order to fix the said magnet element in the receiving pocket (7).

11. Method according to Claim 10, wherein the end region (15) of the fixing element (13) is deformed by means of a heated shaping die (21) which is pressed onto the end region (15).

## Revendications

1. Machine électrique dotée d'un rotor (1) et d'un stator,
dans laquelle le rotor (1) et/ou le stator comportent au moins une poche de réception (7) s'étendant dans la direction axiale à travers le rotor (1) ou le stator, et au moins un élément magnétique (9) reçu dans la poche de réception (7) et fixé dans la poche de réception (7) au moyen d'un agencement de fixation magnétique, et
l'agencement de fixation magnétique comporte au moins un élément de fixation allongé (13) en matière thermoplastique s'étendant dans un espace d'entrefer (11) qui s'étend dans la direction axiale de manière adjacente à l'élément magnétique (9) à travers la poche de réception (7) et coopère avec l'élément magnétique (9) par complémentarité de forme afin de le fixer dans la poche de réception (7), l'élément de fixation (13) coopérant, au niveau de ses parties d'extrémité (15) avec l'élément magnétique (9) par complémentarité de forme,
**caractérisé en ce que** l'élément de fixation allongé (13) se déforme de manière plastique au niveau d'une des deux parties d'extrémité (15) ou au niveau des deux parties d'extrémité (15) par chauffage temporaire et est espacé dans une partie centrale (16) située entre les parties d'extrémité (15) avec un entrefer (20) par rapport à la paroi limitant la poche de réception (7) et/ou à une surface de l'élément magnétique (9), l'entrefer (20) étant formé par un agencement de l'élément de fixation allongé (13) dans l'espace d'entrefer (11) en prévoyant un ajustement avec jeu.

2. Machine électrique selon la revendication 1, dans laquelle l'élément de fixation (13) et l'espace d'entrefer (11) présentent des géométries de section transversale substantiellement complémentaires l'une à l'autre.

3. Machine électrique selon l'une quelconque des revendications 1 et 2, dans laquelle l'élément de fixation (13) est réalisé, au moins au niveau de ses zones d'extrémité (15), sous forme de corps creux avec une cavité (25) s'étendant dans la direction axiale.

4. Machine électrique selon l'une quelconque des revendications 1 et 2, dans laquelle l'élément de fixation (13) est réalisé, au moins au niveau de ses zones d'extrémité (15), sous forme de corps plein sans cavité.

5. Machine électrique selon l'une quelconque des revendications 1 et 2, dans laquelle l'élément de fixation (13) est réalisé sous forme de cylindre ou de goujon.

6. Machine électrique selon l'une quelconque des revendications précédentes, dans laquelle au moins une partie d'extrémité (15) de l'élément de fixation (13) dépasse axialement d'une surface frontale (4) du rotor (1) ou du stator, adjacente à la poche de réception (7), et se déforme de manière plastique.

7. Machine électrique selon l'une quelconque des revendications 1 à 6, dans laquelle au moins une extrémité de l'élément de fixation (13) ne dépasse pas axialement d'une surface frontale (4) du rotor (1) ou du stator, adjacente à la poche de réception (7).

8. Machine électrique selon l'une quelconque des revendications précédentes, dans laquelle le rotor (1) ou le stator comporte un paquet (5) composé de plusieurs lamelles (3) empilées côte à côte, avec des découpes (27) pour former la poche de réception (7).

9. Machine électrique selon la revendication 8, dans laquelle, au moins sur une lamelle frontale (3') sur une face frontale (4) du paquet (5), la découpe (27) présente une section transversale supérieure à celle des lamelles (3") au centre du paquet (5), l'une des zones d'extrémité (15) de l'élément de fixation (13) s'étendant dans la découpe (27) de section transversale supérieure de la lamelle frontale (3).

10. Procédé de fixation d'un élément magnétique (9) dans une poche de réception (7) d'un rotor (1) ou d'un stator d'une machine électrique, le rotor (1) ou le stator comportant au moins une poche de réception (7) s'étendant dans la direction axiale à travers le rotor (1) ou le stator et dans laquelle au moins un élément magnétique (9) doit être reçu, et dans lequel s'étend un espace d'entrefer (11) dans la poche de réception (7) de manière adjacente à l'élément magnétique (9) à recevoir qui ne doit pas être comblé par l'élément magnétique et qui s'étend dans la direction axiale,
le procédé comprenant les étapes suivantes consistant à :
- disposer l'élément magnétique (9) dans la poche de réception (7) ;
- disposer un élément de fixation allongé (13) en matière thermoplastique dans l'espace d'entrefer (11) en prévoyant un ajustement avec jeu ;
- chauffer et déformer de manière plastique au moins une partie d'extrémité (15) de l'élément de fixation (13) de telle sorte qu'il coopère avec l'élément magnétique (9) par complémentarité de forme afin de le fixer dans la poche de réception (7).

11. Procédé selon la revendication 10, dans lequel la zone d'extrémité (15) de l'élément de fixation (13) est déformée au moyen d'un outil de façonnage (21) chauffé, emmanché sur la zone d'extrémité (15).
